(19) **Europäisches Patentamt**

**European Patent Office**

**Office européen des brevets**

(11) **EP 0 980 179 A1**

(12) **EUROPEAN PATENT APPLICATION**

(43) Date of publication:
**16.02.2000 Bulletin 2000/07**

(51) Int. Cl.⁷: **H04N 1/32**

(21) Application number: **99115779.3**

(22) Date of filing: **10.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.08.1998 JP 22688298**

(71) Applicant: **Hitachi, Ltd.**
**Chiyoda-ku, Tokyo 101-8010 (JP)**

(72) Inventors:
• **Yoshiura, Hiroshi**
**Tokyo (JP)**
• **Susaki, Seiichi**
**Totsuka-ku, Yokohama-shi, Kanagawa-ken (JP)**
• **Nagai, Yasuhiko**
**Tokyo (JP)**
• **Shinoda, Takashi**
**gareyama, Nagareyama-shi, Chiba-ken (JP)**

(74) Representative:
**Strehl Schübel-Hopf & Partner**
**Maximilianstrasse 54**
**80538 München (DE)**

(54) **Method of appending information to image and method of extracting information from image**

(57) An information insertion unit 114 alters the image size of a graphic mark 123 so that the number of pixels in each longitudinal lateral direction is equal to ( 32 x n + a ), wherein a represents a decimal number represented by a bit sequence of 5 bits of insertion information 122 to be embedded, and n represents a numerical value so that ( 32 x n + a ) is nearest to the original image size of the graphic mark 123 (in this case, 128). Further, each pixel value of the graphic mark 123 is altered so that the average value/contrast of the pixel values of the overall graphic mark 123 is equal to ( 32 x n + a ), wherein a represents a decimal number represented by a bit sequence of 5 bits to be embedded, and n represents a numerical value so that ( 32 x n + a ) is nearest to the average value/contrast of the original pixel values of the overall graphic mark 123.

FIG. 7

EP 0 980 179 A1

## Description

BACKGROUND OF THE INVENTION

The present invention relates to a technique of appending other data to image data while keeping visibility of an image represented by the image data concerned. U.S. Patent Application Serial No. 09/090,419, Japanese Patent Application No. Hei-10-244719 and Japanese Patent Application No. Hei-10-243345 have been filed as relevant applications to the present application.

A technique which is called as "digital watermark" has been known as a technique of appending other data to image data while keeping visibility of an image represented by the image data concerned.

As described in "Techniques for data hiding", IBM SYSTEM JOURNAL, Vol. 35, Nos. 3 & 4, 1996, pp.313-336, and the like, this technique embeds management information, such as copyright information, into image data itself.

The digital watermark technique has the following features. Embedded data is not usually seen when image data containing that embedded information is displayed and, in addition, the image data itself displayed on a screen is almost not affected by the embedded information. Removing only the embedded information is difficult and, if the embedded information is removed accurately, the picture quality of the image data is significantly degraded. In general, even when the image data is compressed, embedded information may be restored to some extent.

Besides, there has been conventionally known a WWW system with a WWW (World Wide Web) server program and a Browser program, which uses a publicly-open network such as Internet or the like.

The WWW system is composed of at least one WWW server on which a WWW server program for publishing information runs and at least one client terminal on which a browser program for browsing published information runs. Data is transferred between the WWW server and the client terminal via the communication protocol called HTTP (Hyper Text Transfer Protocol).

To publish information on the WWW server, a server user must create a Web page containing data to be published. This page contains text data, image data, audio data, video data, and link data to other Web pages, all interconnected using a structure description language called HTML (Hyper Text Markup Language). Then, the user stores this Web page in a location (directory) in the WWW server so that it may be accessed from other computers (client terminals or other WWW servers).

To browse a published Web page from a client terminal using a browser program, a terminal user must type the URL (Universal Resource Locator) of the Web page. Then, the Web page is sent from the WWW server to the client terminal. The text data, image data, and video data of the Web page are displayed on the client terminal screen. Audio data, if included in the page, is produced from the speaker connected to the client terminal.

The recent trend is that the WWW system like this is used not only as the communication means but also in business. One such application is an electronic commerce system which provides the user with information on goods using this WWW system.

In such an electronic commerce system, most vendors include into their web pages the image data, such as the logos of credit card companies, to allow the user to instantly select one of various payment methods. This is similar to a real-world (not a world such as the Internet) store where the logos of the credit card companies are put up on the counter or in the show window.

Sometimes, a Web page may also contain image data, such as logo marks indicating the Web page creator or an authentic individual or organization which has authorized the Web page, to allow a Web page user to instantly ascertain who has created the Web page or that the Web page has been authorized by the authentic individual or organization.

Conventionally, a technique known as a digital signature has been used to authenticate the relation between digital data and an individual/organization.

The digital signature technique, developed to guarantee the authenticity of digital data, combines public key cipher technology with one-way property functions.

In this technology, a pair of keys, a private key S and a public key V which satisfy $g(f(n, S) V) = n$ and $f(g(n, V), S) = n$, is created first, where $n$ represents data, and $f$ and $g$ represent functions. These formulae mean that data encrypted with the private key S may be decrypted by with the public key V and that, conversely, data encrypted with the public key V may be decrypted with the private key S. It should also be noted that it is virtually impossible to find the private key S from the public key V.

Once the private key S and the public key V are created, the creator passes the public key V to a partner and holds the private key S privately.

When the key creator sends data to the partner, the creator passes data to which a digital signature is attached. This digital signature is created by evaluating data with a predetermined one-way property function and then encrypting the resulting evaluation value with the private key S.

The one-way property function described above can calculate an evaluation value from data, but it is impossible to virtually calculate the original data from the evaluation value. In addition, it is necessary for the one-way property function used in creating a digital signature to return a unique bit string for each piece of unique data; that is, the probability of the function returning the same bit string to two or more pieces of data must be very small. An example of such functions is a one-way hash function which evaluates data and returns a bit string as the evaluation value of the data. The evaluation value h(D) calculated by the one-way hash function is called the hash value of D, where h is the one-way hash function and D is data.

Upon receiving data to which a digital signature is attached, the receiving partner evaluates the data with the one-way property function to obtain an evaluation value and then checks if the evaluation value matches the value generated by decrypting the digital signature using the public key V. When they match, it is verified that the digital signature was created by the holder of the private key S corresponding to the public key V and that the digital signature is for the data that was received.

SUMMARY OF THE INVENTION

According to the digital watermark technique, since the amount of information embedded with keeping the visibility of an image represented by image data is dependent on the image size of the image data, there is a problem that a large amount of information cannot be embedded in image data having a small image size.

Therefore, only a slight amount of information can be embedded in image data having a small image size such as a graphic mark on the above Web page, for example.

On the other hand, a logo mark added to a Web page is image data. Therefore, it cannot be authenticated that the Web page actually contains data that is indicated by the relation between the logo mark and an individual/organization.

Take the logo mark of a credit card company for example. Imagine that an illegal user copies the logo mark of a credit card company from the Web page of a legal agent of the company, pastes it into an appropriate location of the Web page of the agent owned by the illegal user, and then stores the Web page in the WWW server so that any computer may access it. In this case, a consumer may judge, from the logo mark of the credit card company contained in the Web page of the agent owned by the illegal user, that the agent is legal and may send data necessary for settlement, such as a credit card number, to that WWW server. As a result, the illegal user is able to obtain the credit number of the consumer illegally and make an illegal profit.

In view of the foregoing, it is an object of this invention to provide a technique which authenticates the relation between digital data and an individual/organization more reliably. It is another object of this invention to provide a technique which directly presents the user with digital information on an individual/organization associated with digital data such that the relation between the digital information and the individual/organization corresponds to the relation between the digital data itself and the individual/organization.

In order to attain the above object, according to the present invention, there is provided means of certifying it on the basis of information appended to image data having a small image size such as a graphic mark on a Web page or the like whether matters associated with the image data are true or not while keeping visibility of an image represented by the image data to some extent.

Further, according to the present invention, there is provided a novel method of appending information having an amount with which it can be certified whether the matters associated with the image data are true or not while keeping the visibility of the image represented by the image data.

In order to attain the above objects, an information appending method of appending non-image information to image information comprising the steps of: inputting image information and non-image information to be appended to the image information; and altering the value of the input image information to a value which is settled in accordance with the value of the input non-image information and a predetermined rule.

Here, as a specific alteration target of the value of the image information may be considered the size of the image concerned, a statistical value such as the average value of brightness values or color values of the overall image, or the contrast value of brightness values or color values of the overall image concerned.

In the present invention, the non-image information is appended to the image information by altering the value of the image information. According to this method, the degree of the alteration of the image is set to a predetermined level or less so that the visibility of the image represented by the image information can be ensured to some extent, whereby the non-image information can be appended to the image information with keeping the visibility of the image represented by the image information. In order to extract the non-image information thus appended from the image information, the alteration content of the image represented by the image information may be determined and a value which is determined according to the alteration content of the image thus determined and a predetermined rule may be extracted as the non-image information appended to the image information.

Further, another information appending method of appending non-image information to image information comprises the steps of: inputting image information and non-image information to be appended to the image information; discriminating a background portion in the image represented by the input image information; and altering the input image information so that an image pattern of the background portion thus identified becomes an image pattern which is determined according to the value of the input non-image information and a predetermined rule.

In this method, the non-image information is appended to the image information by altering the image pattern of the background portion of the image. According to this method, the degree of the alteration of the image pattern of the background portion of the image is set to a predetermined level or less so that the visibility of the image represented by the image information can be ensured to some extent, whereby the non-image information can be appended to the image information with keeping the visibility of the image represented by the image information.

In order to extract the non-image information thus appended from the image information, the background portion in the image represented by the image information is identified, and an image pattern contained in the background portion thus identified is extracted from the image represented by the image information concerned, and a value which is determined according to the image pattern thus extracted and a predetermined rule is extracted as the non-image information appended to the image information concerned.

Further, according to the present invention, there is provided an information appending method of appending non-image information to image information which comprises the steps of: inputting image information and non-image information to be appended to the image information; generating another image information representing an image containing an image pattern which is determined according to the value of the input non-image information and a predetermined rule; and appending the other image information thus generated to the image information.

In this method, the other image information having the image pattern specified by the non-image information is appended to the image information, whereby the non-image information is appended to the image information. According to this method, the non-image information can be appended to the image information without affecting the visibility of the image represented by the image information serving as a target to which the non-image information is appended.

In order to extract the non-image information thus appended to the image information, the value determined according to the other image information appended to the image information concerned and a predetermined rule may be extracted as non-image information appended to the image information concerned.

In each of the above methods, by using, as non-image information to be appended to image information, a digital signature obtained by encrypting predetermined information relevant to the image information concerned with a secrete key based on a public key cipher of an interested party of the image information concerned method, it can be certified whether the relationship between the image information, the predetermined information and the interested party of the image information is true or not.

## BRIEF DESCRIPTION OF THE DRAWINGS

The present invention will be more apparent from the following detailed description, when taken in conjunction with the accompanying drawings, in which:

Fig. 1 is a block diagram showing a construction of a WWW system according to an embodiment of the present invention;

Fig. 2 is a block diagram showing a construction of a server system according to the embodiment of the present invention;

Fig. 3 is a block diagram showing a construction of a client system according to the embodiment of the present invention;

Fig. 4 is a block diagram showing a construction of a general electronic computer;

Fig. 5 is a flowchart showing a processing flow of embedding information into a graphic mark in a first embodiment of the present invention;

Fig. 6 is a flowchart showing a processing flow of extracting the information thus embedded from the graphic mark according to the first embodiment of the present invention;

Fig. 7 is a diagram showing a state where information is appended to a graphic mark in a second embodiment of the present invention;

Fig. 8 is a diagram showing an image in which information is embedded in the second embodiment of the present invention; and

Fig. 9 is a diagram showing an image in which information is embedded in a third embodiment of the present invention.

## DETAILED DESCRIPTION OF THE PREFERRED EMBODIMENTS

Preferred embodiments according to the present invention will be hereunder described by applying the present invention to a case where information is embedded in a graphic mark such as a logo mark or the like to be attached to a Web page in a WWW system.

First, a first embodiment of the present invention will be described.

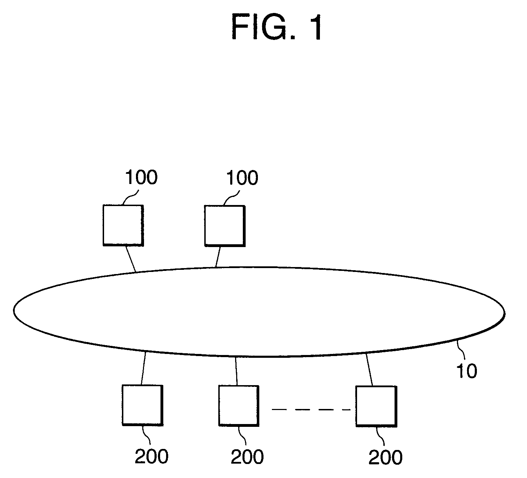

Fig. 1 shows a construction of a WWW system according to a first embodiment of the present invention.

As shown in Fig. 1, the WWW system of the first embodiment comprises a server system (server side system) 100 for distributing contents (Web pages), and a client system (client side system) 200 for browsing Web pages (normally, plural client systems 200 are provided).

The data communication of Web pages and other information between the provider system 100 and each client system 200 is performed through a network 10.

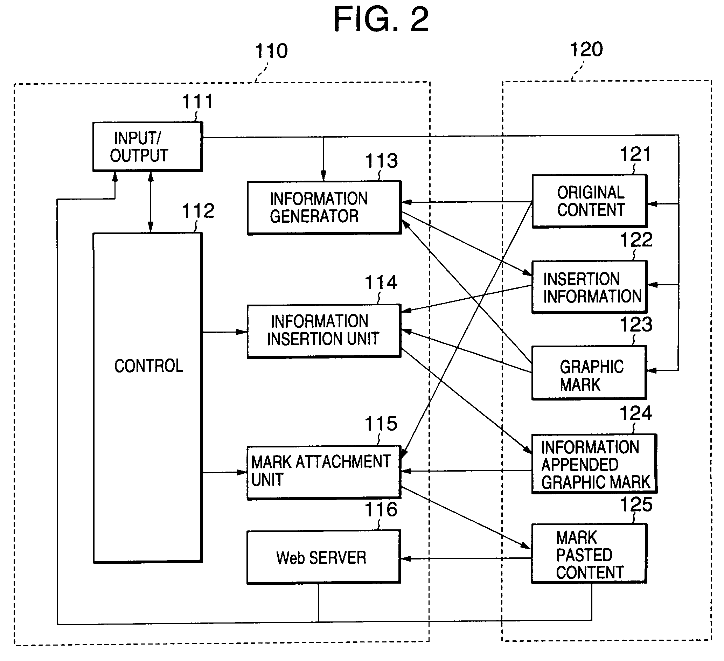

Fig. 2 shows a construction of the server system 100.

As shown in Fig. 2, the server system 100 comprises a processing unit 110 and a storage unit 120. The processing unit 110 comprises an input/output unit 111 for performing various input/output operations, a controller 112 for controlling the respective parts in the server system 100, an information generator 113 for generating insertion information 122 such as information for authentication or the like to be embedded into a graphic mark, an information insertion unit 114 for embedding information into a graphic mark, a mark pasting unit 115 for pasting the graphic mark having the information embedded therein to a Web page, and a Web server unit 116.

The storage unit 120 stores therein an original content 121 which is a Web page before the graphic mark 122 is pasted thereto, insertion information 122 which is information to be embedded into the graphic mark, a graphic mark 123 in which information is to be embedded, a graphic mark 124 in which information has been embedded, and a mark pasted content 125 which is a Web page having the graphic mark embedded with the information. The Web server unit 116 makes the mark pasted content 125 publicly open via the network 10.

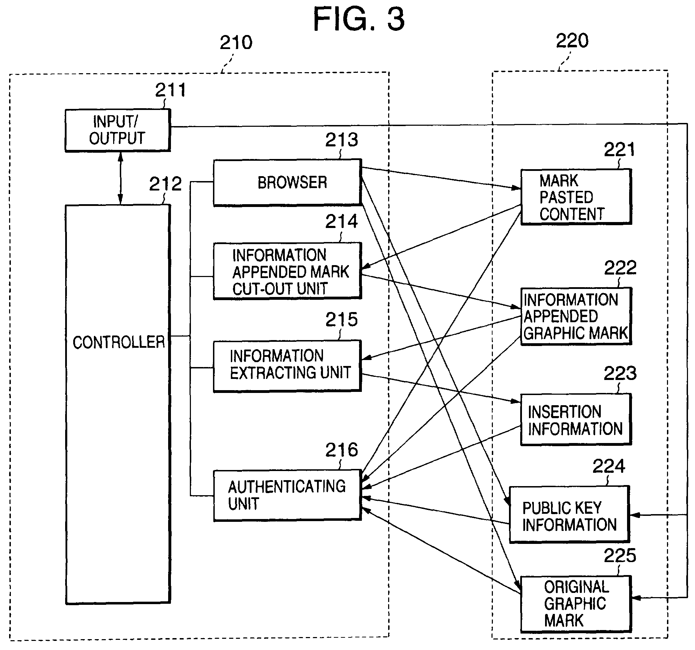

Fig. 3 shows a construction of the client system 200.

As shown in Fig. 3, the client system 200 comprises a processing unit 210 and a storage unit 220. The processing unit 210 includes an input/output unit 211 for performing various input/output operations, a controller 212 for controlling the respective parts in the client system 200, and a browser unit 213 for taking and outputting a Web page from a Web server via the network. Further, the processing unit 210 includes an information-embedded mark cut-out unit 214 for cutting out an information-embedded graphic mark 222 from a mark pasted content 221 when a Web page taken by the browser unit 213 is the mark pasted content 221, an information extracting unit 215 for extracting insertion information 223 from the information-embedded graphic mark 222, and an authentication unit 216 for performing authentication processing by using the insertion information 223.

The storage unit 220 stores therein the mark pasted content 221, the information-embedded graphic mark 222, the insertion information 223, public key information 224 used for the authentication processing, the graphic mark 225, etc.

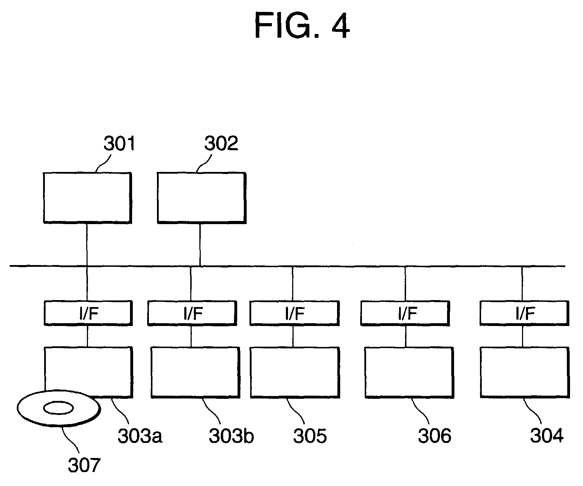

As shown in Fig. 4, the server system 100 and the client system 200 may be built into an electronic computer system with a standard configuration where a CPU 301, a memory 302, an external storage unit 303b which is a hard disk, an external storage unit 303a which is not a hard disk, a communication control unit 304, an input unit 305 such as a keyboard or a pointing device, and an output device 306 such as a display unit are provided.

The processing unit 110 of the server system 100 and the components of the processing unit 110 are processes implemented in the electronic computer system when the CPU 301 executes a program loaded into the memory 302. In this case, the memory 302 and the external storage units 303a and 303b are used as the storage unit 120 of the server system 100. Similarly, the processing unit 210 of the client system 200 and the components of the processing unit 210 are processes implemented in the electronic computer system when the CPU 301 executes a program loaded into the memory 302. In this case, the memory 302 and the external storage units 303a and 303b are used as the storage unit 220 of the client system 200.

A program for creating the server system 100 and the client system 200 in an electronic computer system is loaded into the memory 302 for execution by the CPU 301. The program is pre-recorded on the external storage unit 303b and is loaded, as necessary, into the memory 302 for execution by the CPU 301. Alternatively, the program is pre-recorded on a portable recording medium 307 such as a CD-ROM disc and is loaded directly, as necessary, into the memory 302 via the external storage unit 303a for execution by the CPU 301. It is also possible that the program is installed from the portable recording medium 307 via the external storage unit 303a used for portable recording medium onto the external storage unit 303b such as a hard disk and is loaded, as necessary, into the memory 302 for execution by the CPU 301.

In place of the installation of the program concerned from a portable type storage medium 307, it may be down-loaded from another server system connected through the network to the server system 100 and the client system 200.

The detailed processing executed by the server system 100 and the client system 200 will be described hereunder.

First, the processing executed by the server system 100 will be described.

The controller 112 receives the original content 121 and the graphic mark 123 to be attached to the original content 121 and temporarily stores them into the storage unit 120. The information generator 113 generates the insertion information 123 to be embedded into the graphic mark 123 and stores it into the storage unit 120.

Here, the information generator 113 generate, as the insertion information 123 to be embedded in the graphic mark 123, information necessary to authenticate the matters which can be authenticated on the basis of the graphic mark. For example when the graphic mark 123 is a logo mark and the genuineness of the logo mark can be authenticated, the information generator 113 generates as the insertion information 123 a digital signature obtained by encrypting a hash value of the logo mark with a secrete key of an authenticator having authority over authentication of the genuineness thereof or a proper third institution. This secrete key is beforehand stored in the storage unit 120, and it is read out by the information generator 113.

For example, if the graphic mark 123 is a logo mark and the genuineness of the relationship between the logo mark and the original content 121 to which the logo mark is pasted is allowed to be authenticated, a digital signature obtained by encrypting the hash value of the original content 121 with a secrete key of an authenticator having authority over the authentication of the genuineness thereof or a proper third party institution is generated as the insertion information 123.

For example, if the graphic mark 123 is a logo mark and the genuineness of the logo mark and the genuineness of the relationship between the logo mark and the original content 121 to which the logo mark is pasted is allowed to be authenticated, digital signatures obtained by respectively encrypting the hash value of the logo mark and the hash value of the original content 121 with a secrete key of an authenticator having authority over the authentication of the genuineness thereof or a proper third party institution are generated as the insertion information 123.

Besides, information necessary for authenticating the other genuineness which can be authenticated, and other desired information such as date information, etc. are generated as the insertion information 123. When a user of the server system 100 is different from the authenticator having authority over the authentication of the genuineness which can be authenticated, or the proper third party institution, the information generator 113 cannot know the secrete key of the authenticator or the proper third party institution. Therefore, in this case, the user communicates information with the authenticator or the third party institution through the input/output device, and transmits a request for encryption based on the secrete key of the authenticator or the proper third party institution to the authenticator or the proper third party institution together with information necessary for the encryption. The insertion information transmitted as a response to the request from the authenticator or the proper third party institution is stored in the storage unit 120. Here, the communication of the information with the authenticator or the proper third party institution may be carried out through the network 10.

Subsequently, the information insertion unit 114 performs the embedding processing of embedding the insertion information 122 into the graphic mark 123.

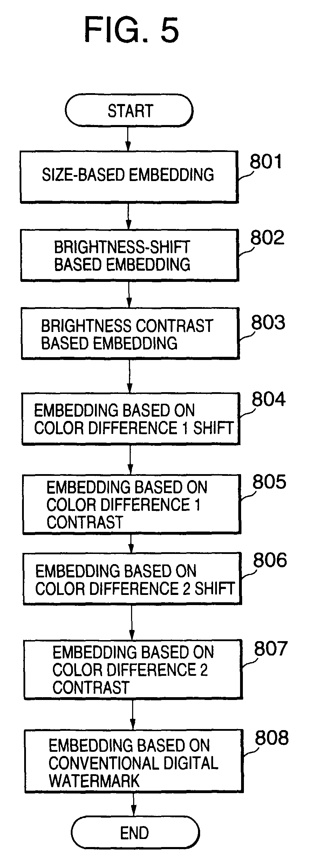

Fig. 5 shows a processing order of the embedding processing.

The details of the embedding processing will be described on the assumption that the graphic mark 123 is an image of $128 \times 128$ pixels, each pixel comprises one brightness data and two color difference data, and the insertion information 122 is information of 55 bits.

In the embedding processing, the insertion information 122 is divided into seven bit sequences each comprising 5 bits and eight bit sequences each comprising 20 bits.

First, the first bit sequence of 5 bits is embedded into the graphic mark 123 according to a size-based embedding step (step 801). In the size-based embedding step, the image size of the graphic mark 123 is altered so that the number of pixels in each of the longitudinal and lateral directions is equal to $(32 \times n + a)$. Here, a represents a decimal number represented by a bit sequence of 5 bits to be embedded, n represents a numerical value with which $(32 \times n + a)$ is set to be closest to the original image size of the graphic mark 123 (128 in this case).

The alteration of the image size described above may be performed by enlarging/reducing the graphic mark 123. Alternatively, when the pixel value is increased after the alteration, the alteration may be performed by adding pixels having specific color (for example, white).

With the above processing, the image size of the graphic mark 123 is changed between 115 pixels and 146 pixels in each of the longitudinal and lateral direction on the basis of the value of 5 bits. Accordingly, the alteration degree of the image size of the graphic mark 123 by the embedding is equal to about several tens percents in each of the longitudinal and lateral directions, so that the visibility of the graphic mark 123 is not greatly lost.

Next, a next 5-bit bit sequence is embedded into the graphic mark 123 by an embedding step based on brightness shift (step 802). In the brightness-shift based embedding step, each brightness data of the graphic mark 123 is altered so that the average value of the overall brightness data of the graphic mark 123 is equal to $(32 \times n + a)$. Here, a represents a decimal number represented by the bit sequence of 5 bits to be embedded, and n represents a numerical value so that $(32 \times n + a)$ is set to be nearest to the average value of the original brightness data of the overall graphic mark 123.

Subsequently, a next 5-bit bit sequence is embedded into the graphic mark 123 by an embedding step based on brightness contrast (step 803). In the brightness-contrast based embedding step, each brightness data of the graphic mark 123 is altered so that the brightness contrast of the graphic mark 123 is equal to $(32 \times n + a)$. Here, a represents a decimal number represented by the 5-bit bit sequence to be embedded, and n represents a numerical value so that $(32 \times n + a)$ is set to be nearest to the original brightness contrast of the overall graphic mark 123. Here, the overall brightness contrast of the graphic mark 123 is set as the standard deviation of the overall brightness data of the graphic mark 123.

Subsequently, an embedding step based on color difference shift (steps 804, 806) and an embedding step based on color difference contrast shift (steps 805, 807) for each 5-bit bit sequence are carried out for the remaining two color difference data as in the case of the brightness data.

Finally, the remaining 10 bits are embedded into the graphic mark 123 by digital watermark (step 808), and stored as an information-appended graphic mark 124 into the storage unit 120.

It is not necessary to perform all the information embedding steps from 801 to 807. Only some of them may be executed or the bit number of the embedded information may be varied among the respective steps in accordance with the bit number of the information to be embedded. Further, by using an expression manner of pixel values of RGB or the like in place of using the expression manner based on the brightness, color difference, the average value of each color or contrast may be embedded.

The bit number of information to be embedded on the basis of the digital watermark in the step 808 is suppressed to the extent that integer values obtained by rounding the values which are used for the embedding of the information among the average value of brightness/color difference, and the contrast values of brightness/color difference are not valued.

By the above processing, a larger amount of data can be embedded with keeping the visibility of the graphic mark as compared with the conventional information embedding operation based on only the digital watermark.

Returning to Fig. 2, a mark appending unit 115 edits an original content 121 stored in the storage unit 120, and pastes an information-appended graphic mark to the original content 121 to creates the mark-pasted content 125 and stores it into the storage unit 120. Specifically, when the original content 121 is an HTML document, the attachment of the information-appended graphic mark to the original content 121 is performed by describing the location (URL) of the information-appended graphic mark file into the HTML document with a〈IMG SRC〉tag.

The WWW server system 116 makes the mark-pasted content 125 serving as a Web page publicly open to the network 10.

The foregoing processing is carried out by the server system 100.

Next, the processing carried out by the client system 200 will be described hereunder.

The browser unit 13 takes a Web page from the Web server on the network and stores it into the storage unit 220, and also outputs the content thereof from the input/output unit 211 to a user.

When the Web page stored in the storage unit 220 is the mark-pasted content 125, upon receiving an instruction for the authentication processing through the input/output unit 211, the information-appended mark cut-out unit 214 cuts out the information-appended graphic mark 222 from the mark-pasted content 221 and stores it into the storage unit 220. The information extracting unit 215 restores the insertion information 223 embedded in the information-appended graphic mark 222, and stores it into the storage unit 220.

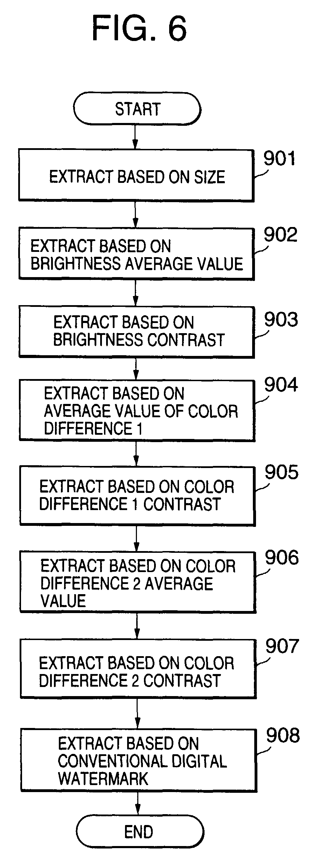

Fig. 6 shows the procedure of the processing of restoring the insertion information carried out by the information extracting unit 215.

As shown in Fig. 6, in this processing, the number of pixels in each of the longitudinal and lateral directions of the information-appended graphic mark 222 is first detected, the pixel number thus detected is divided by 32, and a value obtained by representing the residual of the division with 5 bits is restored as 5-bit information (step 901).

Subsequently, the average value of the brightness data of the overall information-appended graphic mark 222 is calculated and divided by 32, and then a value obtained by representing the residual of the division with 5 bits is restored (step 902). Thereafter, the contrast of the brightness data of the overall information-appended graphic mark 222 is calculated, the contrast value thus calculated is divided by 32, and then a value obtained by representing the residual of the division with 5 bits is restored (step 903).

Likewise, 5-bit information is restored from the average value and the contrast for each of color difference data 1 and color difference data 2 (steps 904 to 907). Finally, the digital watermark embedded in the information-appended graphic mark 222 is extracted in the same manner as the conventional manner to restore 10 bits (step 901). The respective bits thus obtained are linked to one another to restore information of 45 bits, and the processing is completed.

Returning to Fig. 3, the authentication unit 216 authenticates the matters which can be authenticated by the insertion information 223.

For example, when the graphic mark is a logo mark and the genuineness of the logo mark is authenticated, an authenticating unit 216 calculates a hash value of an original graphic mark, and compares the hash value with a value obtained by decoding the insertion information 223 with public key information 224 of an authenticator having authority over the authentication of the genuineness of the insertion information 223 or a proper third party institution. If the hash value and the value thus obtained are coincident with each other, the genuineness of the logo mark is authenticated. Here, if the server system 100 which makes the Web page open to the public is proper, the original graphic mark 225 is the same as the graphic mark 123 of the server system 100, and corresponds to the information-appended graphic mark 222 before the information is embedded.

Here, the original graphic mark 225 and the public key information 224 are respectively obtained through the browser unit 213 or the input/output unit 211 from an authenticator having authority over the authentication of the genuineness or a proper third party institution by a reliable method, and stored in the storage unit 220.

For example when the graphic mark is a logo mark and the genuineness of the relationship between the logo mark and the original content 121 to which the logo mark is pasted is authenticated, the original content from which the information-appended graphic mark 222 is excluded is restored from the mark pasted content 221, and the hash value of the original content is calculated. The hash value thus calculated is compared with the value obtained by decoding the insertion information 223 with the public key 224 of the authenticator having the authority over the authentication of the genuineness or the proper third party institution, and if they are coincident with each other, the genuineness is authenticated.

For example when the graphic mark is a logo mark and the genuineness of the logo mark and the genuineness of the relationship between the logo mark and the original content 121 to which the logo mark is pasted can be authenticated, the hash value of the original graphic mark 225, and the hash value of the original content obtained by excluding the information-appended graphic mark 222 from the mark pasted content 22 are calculated. The hash values thus calculated is compared with the values obtained by decoding the insertion information 223 with the public key information 224 of the authenticator having authority over the authentication of the genuineness or the proper third party institution, and if both are coincident with each other, the genuineness is authenticated.

The authenticator 216 notifies the authentication result through the input/output unit 211 to a user.

The above authentication processing may be performed in cooperation of the authentication unit 216 of the client system 200 and a reliable authentication device which is provided on the network 10.

For example, the original content, the original graphic mark and any one or all of the public key information of the authenticator and the third party institution are beforehand registered in the authentication device. When the authentication is performed, the authentication unit 216 of the client system 200 transmits the insertion information and other information necessary for the authentication processing to the authentication device through the network 10. The authentication device performs the above authentication processing, and the authentication result thus obtained is returned to the authentication unit 216 of the client system 200.

The information-appended mark cut-out unit 214, the information extracting unit 215 and the authentication unit 216 of the client system 200 according to this embodiment may be implemented by plug-in software for the browser 213 implemented by a browser program. In this case, when the information-appended graphic mark is selected by the user on the display of the mark pasted content carried out by the browser unit 213, it is better that the plug-in software implementing the information-appended mark cut-out unit 214, the information extracting unit 215 and the authentication unit 216 is started and the information-appended mark cut-out unit 214, the information extracting unit 215 and the authentication unit 216 is made to perform the above processing for the selected information-appended graphic mark. In this case, a special extension is provided to the data file of the information-appended graphic mark to enable the browser unit 213 to recognize that the information-appended graphic mark should be processed by such plug-in software.

The server system 100 according to this embodiment may be provided with an editor unit implemented by execution of an editor program for generating and editing the original content 121. In this case, the information generator 113, the information insertion unit 114 and the mark appending unit 115 may be implemented by plug-in software available from the editor program. In this case, the plug-in software is started by selecting a menu supplied from the editor program, and the processing of the information generator 113, the information insertion unit 114 and the mark pasting unit 115 is executed, thereby editing the original content 121 edited by the editor program and generating the mark pasted content 125.

Next, a second embodiment according to the present invention will be described.

The second embodiment is different from the first embodiment in the embedding manner of the insertion information 122 into the graphic mark 123 which is carried out by the information insertion unit 114 of the server system 100, the cut-out manner carried out by the information-appended mark cut-out unit 214 of the client system 200 and the extraction manner of the insertion information carried out by the information extracting unit 215.

The insertion information 122 inserted by the information insertion unit 114 will now be described.

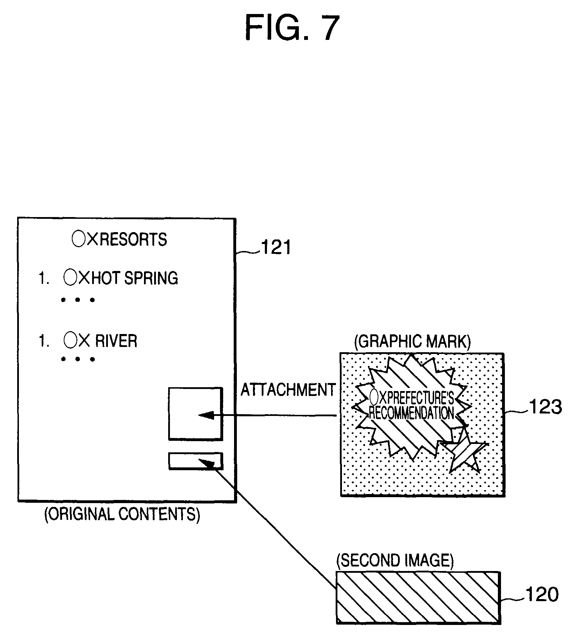

In the second embodiment, a second image is appended to the graphic mark 123 as shown in Fig. 7.

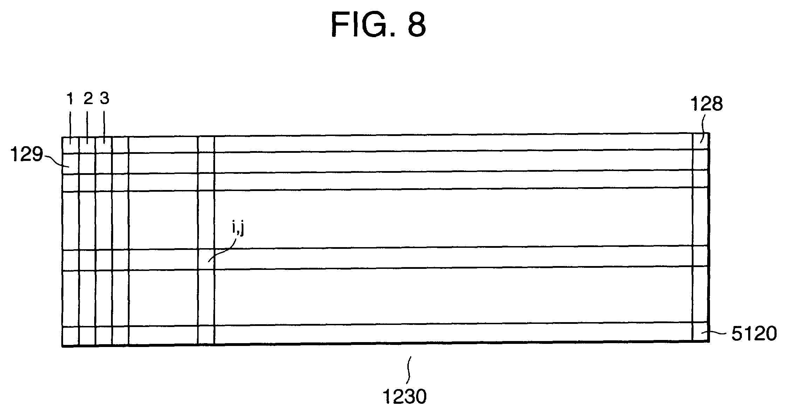

As shown in Fig. 8, a second image 1230 is composed of $128 \times 40$ pixels, and it is divided into 320 blocks each comprising $4 \times 4$ pixels. The information insertion unit 114 allocates each bit of the insertion information 122 of 300 bits to each of 300 blocks selected from 320 blocks in preferential order based on a predetermined rule, and paints each block with the color corresponding to the value of the bit allocated to the block. For example, a block to which a bit of "1" is allocated is painted with black, and a block to which a bit of "0" is allocated is painted with white. The graphic mark 123 and the second image 1230 are stored as information-appended graphic mark 124 into the storage unit 120.

The block to be processed as described above may be set to a $1 \times 1$ pixel block, that is, the block may be a pixel itself. In this case, the size of the second image may be smaller.

In this case, the mark pasting unit 115 edits the original content 121 stored in the storage unit 120, pastes to the original content 121 both of the graphic mark 123 and the second image 1230 which are stored as the information-appended graphic mark 124 in the storage unit 120, thereby creating the mark pasted content 125, and then stores the mark pasted content 125 into the storage unit 120. The WWW server unit 116 makes the mark pasted content 125 serving as a Web page in the network 10 open to the public.

On the other hand, upon receiving an instruction of the authentication processing from a user, the information-appended mark cut-out unit 214 of the client system 200 cuts out the above second image and stores it into the storage unit 220. The information extracting unit 215 of the client system 200 selects 300 blocks from 320 blocks of the second image in the preferential order based on the predetermined rule, and converts the painting color of each block to a bit value. For example, a bit painted with white is converted to a bit of "0", and a bit painted with black is converted to a bit of "1". The bits thus converted are linked to one another to restore the insertion information 223 of 300 bits.

Next, a third embodiment according to the present invention will be described.

The third embodiment of the present invention is different from the first embodiment in the embedding manner of the insertion information 122 into the graphic mark 123 which is carried out by the information insertion unit 114 of the server system 100 and the extraction manner of the insertion information carried out by the information extracting unit 215 of the client system 200

The insertion information 122 inserted by the information insertion unit 114 in the third embodiment will be described.

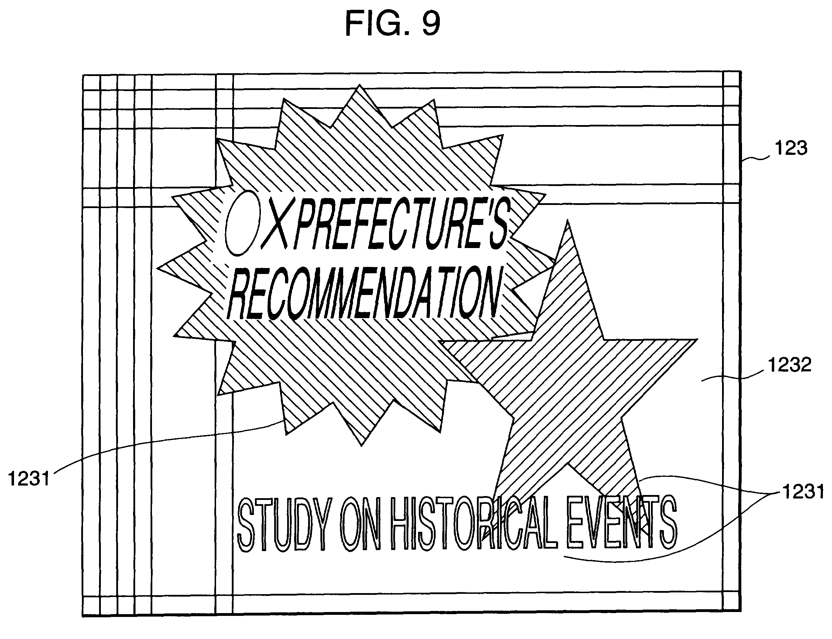

In the third embodiment, as shown in Fig. 9, a background portion 1232 of the graphic mark 123 is replaced by an image in which the insertion information 122 is embedded. Here, the background portion 1232 of the graphic mark 123 corresponds to any portion containing no significant graphics/characters 1231 in the graphic mark 123. Various methods may be used to identify the area of the background portion of the graphic mark 123. For example, there may be used a method of creating a graphic mark 123 while the pixel value of the area of the background portion is beforehand set to a special value or while information indicating the area of the background portion (mask layer or information called as $\alpha$-channel) is added, and identifying the area of the background portion on the basis of the above information.

If the area of the background portion is identified as described above, the information insertion unit 114 successively selects pixels or blocks each having a predetermined size (for example, $2 \times 2$ pixels) contained in the area according to a predetermined rule, successively allocates each bit of the insertion information 122 to each of the pixels or blocks thus selected and then paints each pixel or block with the color corresponding to the bit value thus allocated. For example, a pixel or block to which a bit of "1" is allocated is painted with black, and a pixel or block to which a bit of "0" is allocated is painted with white. Thereafter, the graphic mark 123 is stored as the information-appended graphic mark 124 into the storage unit 120.

In order to enable identification of the area of a pixel or block painted with the color corresponding to a bit value of the insertion information 122, the information insertion unit 114 may add the information representing this area (mask layer or information called as $\alpha$-channel) to create the graphic mark 123.

Further, in order to enable identification of the area of a pixel or block painted in accordance with a bit value of the insertion information 122, the information insertion unit 114 may contain into the graphic mark a special image pattern representing the range of the area of the pixel or block painted in accordance with a bit value of the insertion information 122. For example, the start and end portion of the area of pixels or blocks which are to be sequentially scanned when the pixels or blocks of the area of the background portion are scanned in raster order, are painted with a specific pattern, and the pixels or blocks of the area of the background portion between the portions painted with the specific pattern are painted with the color corresponding to a bit value of the insertion information 122.

The painting color corresponding to the bit value of the insertion information is set to a color which is not used for pixels graphic mark 123, thereby enabling identification of a pixel or block painted in accordance with the bit value of the insertion information 122. This may be implemented as follows. For example when white and black is used as the painting color, the color of a white or black pixel other than painted pixels may be somewhat altered (for example, white is altered to gray color near to white, and black is altered to gray color near to black, for example).

The information extracting unit 215 of the client system 300 first identifies the background portion of the information-appended graphic mark 222 on the basis of the information representing the area or the specific image pattern as described above, successively selects the pixels or blocks each having a predetermined size (for example, $2 \times 2$ pixels) contained in the area according to the predetermined rule, and converts the painting color of each pixel or block to a bit value. For example, a bit painted with white is converted to a bit of "0", and a bit painted with black is converted to a bit of "1". The bits thus converted are linked to one another to restore the insertion information 223.

As described above, according to the present invention, there can be provided a new method of appending information to image data with keeping the visibility of the image represented by the image data to some extent.

Further, according to the present invention, on the basis of information appended to image data having a small image size such as a logo mark or the like on a Web page with keeping the visibility of the image represented by the image data, the genuineness of matters relevant to the image data can be authenticated.

While the present invention has been described in detail and pictorially in the accompanying drawings it is not limited to such details since many changes and modifications recognizable to those of ordinary skill in the art may be made to the invention without departing from the spirit and the scope thereof.

**Claims**

1. An method of appending non-image information to image information, comprising the steps of:

   inputting image information and non-image information to be appended to the image information; and
   altering the input image information to a value which is settled in accordance with the value of the input non-image information and a predetermined rule.

2. The method of claim 1, further comprising the step of generating as the non-image information a digital signature obtained by encrypting predetermined information relevant to the image information with a secrete key based on a public key encrypting technique of a predetermined interested party of the image information.

3. An method for extracting non-image information from image information to which the non-image information is appended, comprising the steps of:

   inputting image information;
   detecting a content of an image alteration which is made to the input image information; and
   extracting a value determined according to the image alteration content thus detected and a predetermined rule as non-image information appended to the input image information.

4. The method of any preceding claim, wherein an alteration target of the image is the size of the image.

5. The method of any of claims 1 to 3, wherein an alteration target of the image is an average value of brightness values or colour values of the overall image.

6. The method of any of claims 1 to 3, wherein an alteration target of the image is a contrast value of brightness values or colour values of the overall

image.

# FIG. 1

100      100

10

200     200     200

# FIG. 2

EP 0 980 179 A1

# FIG. 3

INPUT/OUTPUT **211**

CONTROLLER **212**

BROWSER **213**

INFORMATION APPENDED MARK CUT-OUT UNIT **214**

INFORMATION EXTRACTING UNIT **215**

AUTHENTICATING UNIT **216**

**210**

MARK PASTED CONTENT **221**

INFORMATION APPENDED GRAPHIC MARK **222**

INSERTION INFORMATION **223**

PUBLIC KEY INFORMATION **224**

ORIGINAL GRAPHIC MARK **225**

**220**

EP 0 980 179 A1

# FIG. 4

# FIG. 5

```
        START

   SIZE-BASED EMBEDDING          801

   BRIGHTNESS-SHIFT              802
   BASED EMBEDDING

   BRIGHTNESS CONTRAST          803
   BASED EMBEDDING

   EMBEDDING BASED ON           804
   COLOR DIFFERENCE 1 SHIFT

   EMBEDDING BASED ON           805
   COLOR DIFFERENCE 1
   CONTRAST

   EMBEDDING BASED ON           806
   COLOR DIFFERENCE 2 SHIFT

   EMBEDDING BASED ON           807
   COLOR DIFFERENCE 2
   CONTRAST

   EMBEDDING BASED ON           808
   CONVENTIONAL DIGITAL
   WATERMARK

        END
```

# FIG. 6

```
           ┌─────────────┐
           │    START    │
           └─────────────┘
                  │
                  ▼
    ┌───────────────────────────┐  901
    │    EXTRACT BASED ON SIZE   │
    └───────────────────────────┘
                  │
                  ▼
    ┌───────────────────────────┐  902
    │    EXTRACT BASED ON        │
    │  BRIGHTNESS AVERAGE VALUE  │
    └───────────────────────────┘
                  │
                  ▼
    ┌───────────────────────────┐  903
    │    EXTRACT BASED ON        │
    │   BRIGHTNESS CONTRAST      │
    └───────────────────────────┘
                  │
                  ▼
    ┌───────────────────────────┐  904
    │    EXTRACT BASED ON        │
    │  AVERAGE VALUE OF COLOR    │
    │  DIFFERENCE 1              │
    └───────────────────────────┘
                  │
                  ▼
    ┌───────────────────────────┐  905
    │   EXTRACT BASED ON COLOR   │
    │   DIFFERENCE 1 CONTRAST    │
    └───────────────────────────┘
                  │
                  ▼
    ┌───────────────────────────┐  906
    │   EXTRACT BASED ON COLOR   │
    │   DIFFERENCE 2 AVERAGE     │
    │   VALUE                    │
    └───────────────────────────┘
                  │
                  ▼
    ┌───────────────────────────┐  907
    │   EXTRACT BASED ON COLOR   │
    │   DIFFERENCE 2 CONTRAST    │
    └───────────────────────────┘
                  │
                  ▼
    ┌───────────────────────────┐  908
    │    EXTRACT BASED ON        │
    │  CONVENTIONAL DIGITAL      │
    │  WATERMARK                 │
    └───────────────────────────┘
                  │
                  ▼
           ┌─────────────┐
           │     END     │
           └─────────────┘
```

# FIG. 7

○✕RESORTS ～121

1. ○✕HOT SPRING
   • • •

1. ○✕ RIVER
   • • •

(ORIGINAL CONTENTS)

ATTACHMENT

(GRAPHIC MARK)

○✕PREFECTURE'S RECOMMENDATION ～123

(SECOND IMAGE) ～120

# FIG. 8

EP 0 980 179 A1

## FIG. 9

EP 0 980 179 A1

European Patent
Office

**EUROPEAN SEARCH REPORT**

Application Number

EP 99 11 5779

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 590 884 A (CANON KK) 6 April 1994 (1994-04-06) * abstract * * claims 1-19 * | 1,3,5,6 | H04N1/32 |
| X | US 5 530 759 A (MAGERLEIN KAREN A ET AL) 25 June 1996 (1996-06-25) * abstract * * figures 1-5 * * claims 1-9,11 * | 1,5,6 | |
| Y | | 2,5,6 | |
| X | EP 0 854 633 A (NIPPON ELECTRIC CO) 22 July 1998 (1998-07-22) * column 1, line 43 - line 55 * * column 7, line 18 - line 26 * * figures 2-4 * | 1,3 | |
| Y | | 5,6 | |
| Y | SCHNEIDER M ET AL: "ROBUST CONTENT BASED DIGITAL SIGNATURE FOR IMAGE AUTHENTICATION" PROCEEDINGS OF THE INTERNATIONAL CONFERENCE ON IMAGE PROCESSING (ICIP),US,NEW YORK, IEEE, page 227-230 XP002090178 ISBN: 0-7803-3259-8 * the whole document * | 2 | **TECHNICAL FIELDS SEARCHED (Int.Cl.7)** H04N |
| A | SASAKI R ET AL: "SECURITY TECHNOLOGY FOR OPEN NETWORKS" HITACHI REVIEW,JP,HITACHI LTD. TOKYO, vol. 46, no. 4, page 197-202 XP000738847 ISSN: 0018-277X * the whole document * | 1-6 | |

The present search report has been drawn up for all claims

| Place of search | Date of completion of the search | Examiner |
|---|---|---|
| THE HAGUE | 15 December 1999 | Stoffers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 11 5779

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-1999

| Patent document cited in search report | | Publication date | Patent family member(s) | | Publication date |
|---|---|---|---|---|---|
| EP 0590884 | A | 06-04-1994 | JP | 6113109 A | 22-04-1994 |
| | | | JP | 6113110 A | 22-04-1994 |
| | | | JP | 6113112 A | 22-04-1994 |
| | | | JP | 6113113 A | 22-04-1994 |
| | | | CA | 2106706 A | 29-03-1994 |
| | | | DE | 69319290 D | 30-07-1998 |
| | | | DE | 69319290 T | 12-11-1998 |
| | | | US | 5557412 A | 17-09-1996 |
| | | | US | 5696594 A | 09-12-1997 |
| US 5530759 | A | 25-06-1996 | EP | 0725529 A | 07-08-1996 |
| | | | JP | 8241403 A | 17-09-1996 |
| EP 0854633 | A | 22-07-1998 | CA | 2226719 A | 17-07-1998 |
| | | | JP | 10290312 A | 27-10-1998 |

EPO FORM P0459

For more details about this annex : see Official Journal of the European Patent Office, No. 12/82